(19) Europäisches Patentamt
European Patent Office
Office européen des brevets

(11) **EP 0 610 798 B1**

(12) **EUROPÄISCHE PATENTSCHRIFT**

(45) Veröffentlichungstag und Bekanntmachung des Hinweises auf die Patenterteilung:
**17.06.1998 Patentblatt 1998/25**

(51) Int Cl.6: **H04L 25/49**

(21) Anmeldenummer: **94101576.0**

(22) Anmeldetag: **02.02.1994**

(54) **Selbstjustierender Phasendiskriminator für CMI-codierte Signale**

Self-aligning phase comparator for CMI coded signals

Discriminateur de phase, avec autoalignement pour des signaux à codage CMI

(84) Benannte Vertragsstaaten:
**AT BE CH DE DK ES FR GB GR IT LI NL SE**

(30) Priorität: **08.02.1993 DE 4303580**

(43) Veröffentlichungstag der Anmeldung:
**17.08.1994 Patentblatt 1994/33**

(73) Patentinhaber: **SIEMENS AKTIENGESELLSCHAFT**
**80333 München (DE)**

(72) Erfinder: **Rathgeber, Max**
**D-82024 Taufkirchen (DE)**

(56) Entgegenhaltungen:
**EP-A- 0 115 327      DE-C- 3 737 015**
**US-A- 4 837 782**

## Beschreibung

Die Erfindung betrifft einen Phasendiskriminator für CMI-codierte Signale entsprechend dem Oberbegriff des Anspruchs 1.

Bei CMI-codierten Signalen treten bekanntlich neben vollbitbreiten Impulsen entsprechend einem Binärsignal auch halbbitbreite Impulse auf, die als Folge einer logischen Null und einer logischen Eins verwendet werden, während der Eins/Null-Übergang, also die logische Eins gefolgt von einer logischen Null, in der Regel als verbotenes Codewort nicht verwendet wird. Damit enthält das fehlerfreie CMI-Signal Null-Eins-Übergänge - also eine positive oder ansteigende Impulsflanke, sowohl zwischen den CMI-Codewörtern als auch im Codewort, Eins-Null-Übergänge, also die negative oder abfallende Impulsflanken treten nur zwischen den Codewörtern auf. Bei der Takterzeugung, beispielsweise für eine Regenerierung oder für eine Umwandlung von Signalen vom CMI-Code in den Binärcode, tritt nun das Problem auf, daß der Phasendiskriminator für die zur Takterzeugung verwendete Phasenregelschleife bei einer Taktfrequenz entsprechend der doppelten Bitfolgefrequenz arbeiten müßte, so daß die Phasenregelschleife zunächst ein Taktsignal entsprechend der doppelten Bitfolgefrequenz erzeugt, aus dem anschließend durch 2:1-Frequenzteilung der zugehörige Binärtakt erzeugt wird. Bei dieser Art der Takterzeugung kann ein Phasenfehler von 180° auftreten, der durch Einstellung des Phasendiskriminators auf die falsche Taktflanke zustande kommt, es können auch durch einzelne Bitfehler entsprechende Phasensprünge auftreten. Damit ergibt sich die Notwendigkeit einer Phasenauswahlschaltung, die eventuell mit vorgeschaltetem Schwellenwertentscheider oder durch einen Frequenzteiler mit Schwungradcharakteristik realisiert werden kann, so daß erst eine bestimmte Häufigkeit von verbotenen Codeworten zum Umsteuern der Phase führt. Trotz des hohen Aufwandes können aber auch weiterhin Phasenfehler auftreten. Aus Tietze, Schenk "Halbleiter-Schaltungstechnik", 9. Auflage Springer Verlag Berlin 1989, Seite 962 ist bereits ein Phasendiskriminator bekannt, der auch als Phasendetektor bezeichnet wird und der zwei flankengetriggerte D-Flipflops mit nachgeschaltetem UND-Gatter und Subtrahierer enthält, wobei im vorliegenden Falle das Vorzeichengedächtnis keine Rolle spielt.

Die Aufgabe der Erfindung besteht darin, einen Phasendiskriminator der eingangs erwähnten Art so weiterzubilden, daß dieser ohne zusätzliche "Schwungradfunktion" eine eindeutige und richtige Phasensynchronisierung vornimmt, zusätzlich sollte eine einfache Kombination mit einem Impulsregenerator und einem CMI-Binärcode Wandler möglich sein.

Die Hauptaufgabe wird durch einen Phasendiskriminator der eingangs erwähnten Art gelöst, der durch die im Kennzeichen des Patentanspruchs 1 angegebenen Merkmale weitergebildet ist, die Lösung der weitergehenden Aufgabe ist in den Unteransprüchen beschrieben. Die Erfindung beruht auf der Erkenntnis, daß nur die negativen Signalflanken die richtige Phasenlage der Binärbitübergänge markieren.

Von besonderem Vorteil beim erfindungsgemäßen Phasendiskriminator ist die selbstjustierende Funktion, so daß normalerweise kein Abgleich des Abtastzeitpunktes auf Bitmitte erforderlich ist, vorteilhaft sind auch neben dem vergleichsweise geringem Aufwand die ausschließliche Verwendung digitaler Baugruppen, weil das Regelkriterium nur aus dem Eins-Null-Übergang abgeleitet wird und somit die gesamte Phasenregelschleife als Schwungrad bzw. Integrator für die aus dem CMI-Codewort abgeleitete Taktphase wirkt.

Die Erfindung soll im folgenden anhand eines in der Zeichnung dargestellten Ausführungsbeispiels näher erläutert werden.

Dabei zeigt

Fig. 1    das Schaltbild des erfindungsgemäßen Phasendiskriminators und

Fig. 2    ein Phasendiagramm für den eingeschwungenen Betrieb zur Funktionserläuterung.

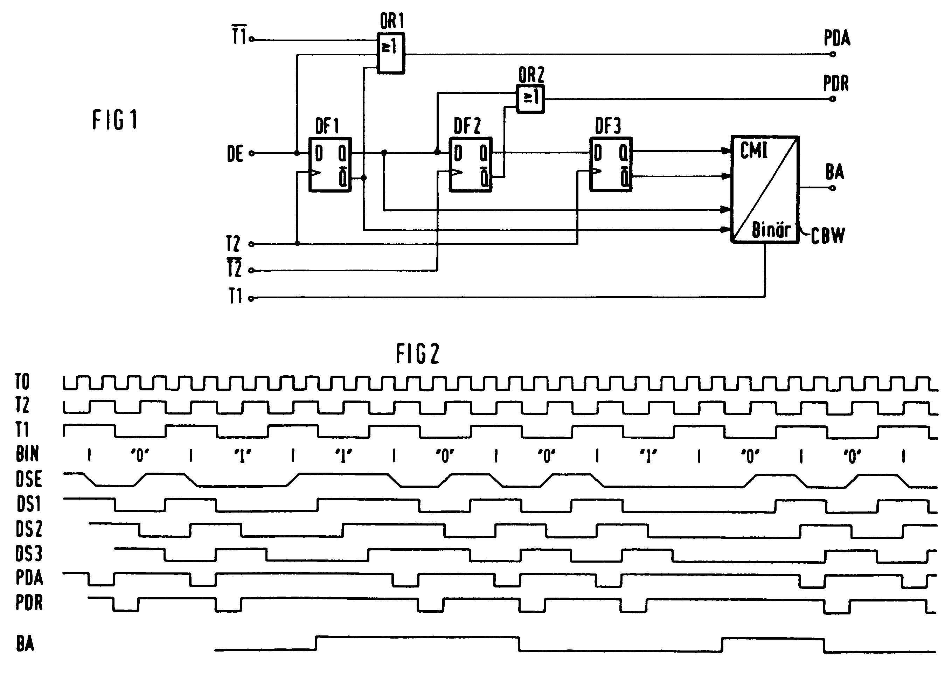

Der in der Figur 1 dargestellte Phasendiskriminator weist einen Dateneingang DE auf, der mit einer Quelle für CMI-codierte digitale Signale verbunden ist. Mit diesem Dateneingang DE sind der D-Eingang eines ersten D-Flipflops DF1 und der erste Eingang eines ersten ODER-Gatters OR1 verbunden, dessen zweiter Eingang an eine Quelle für ein inverses erstes Taktsignal $\overline{T1}$ angeschlossen ist. Der invertierende Ausgang $\overline{Q}$ des ersten D-Flipflops DF1 ist mit einem dritten Eingang des ersten ODER-Gatters OR1 verbunden, während der nichtinvertierende Ausgang Q des ersten D-Flipflops mit dem D-Eingang eines zweiten D-Flipflops DF2 sowie mit dem ersten Eingang eines zweiten ODER-Gatters OR2 verbunden ist. Der invertierende Ausgang $\overline{Q}$ des zweiten D-Flipflops DF2 ist mit dem zweiten Eingang des zweiten ODER-Gatters OR2 verbunden. Bei beiden D-Flipflops DF1, DF2 handelt es sich um mit der negativen Taktflanke getriggerte Flipflops, der Taktanschluß des D-Flipflops DF1 ist mit einer Quelle für ein zweites Taktsignal T2 und der Takteingang des zweiten D-Flipflops DF2 ist mit einer Quelle für ein inverses zweites Taktsignal $\overline{T2}$ verbunden. Der Ausgangsanschluß des ersten ODER-Gatters OR1 stellt gleichzeitig den Ausgangsanschluß PDA des Phasendiskriminators dar, der mit einem zugeordneten Eingangsanschluß eines nachgeschalteten Schleifen-Verstärkers verbunden ist. Damit stellt die Anordnung aus den ersten D-Flipflop DF1 und dem ersten ODER-Gatter OR1 bereits einen vollständigen funktionstüchtigen Phasendiskriminator dar, der für die genannten Zwecke zu verwenden ist.

Üblicherweise wird der dem Phasendiskriminator nachgeschaltete Schleifenverstärker als symmetrischer Differenzverstärker mit 2 Eingängen ausgeführt, bei dem der eine Eingangsanschluß mit dem Phasendiskriminatorausgang und der andere Eingangsanschluß mit einer Referenzspannungsquelle verbunden ist. In diesem Fall ist jedoch das Ausgangssignal dieses Schleifenverstärkers stark vom Impulsmuster des Eingangssignals abhängig. Zur Verringerung dieser Patternabhangigkeit ist im vorliegenden Fall der zweite Eingang des Schleifenverstärkers über den Anschluß PDR mit dem Ausgang des zweiten ODER-Gatters OR2 verbunden, das ebenso wie das zweite D-Flipflop nur im Hinblick auf diesen Anwendungsfall vorgesehen ist.

Wie bereits eingangs ausgeführt, ist in den Empfangsstellen für CMI-codierte Signale häufig neben einem Phasendiskriminator ein Impulsregenerator und ein CMI-Binärcodewandler vorgesehen. Entsprechend der Erfindung wird der Phasendiskriminator gleichzeitig als Impulsregenerator und als Teil eines CMI-Decoders verwendet. Zur Impulsregenerierung der CMI-Signale dient beim Ausführungsbeispiel das erste D-Flipflop DF1, zur weiteren Aufbereitung und zur Serien-Parallel-Wandlung des Ausgangssignals des zweiten D-Flipflops DF2 dient ein drittes D-Flipflop DF3, dessen D-Eingang mit dem nichtinvertierenden Ausgang Q des zweiten D-Flipflops DF2 und dessen Takteingang mit dem Takteingang des ersten D-Flipflops DF1 verbunden ist. Die vom ersten und vom dritten D-Flipflops DF1, DF3 aufbereiteten Signale werden von deren invertierenden bzw. nichtinvertierenden Ausgängen an zugeordnete Eingänge eines CMI-Binarwandlers CBW abgegeben, dessen Takteingang außerdem mit einer Quelle für ein erstes Taktsignal T1 verbunden ist. Das erste Taktsignal T1 entspricht dabei dem Binärtakt und das zweite Taktsignal dem CMI-Takt. Ein CMI-Decoder ähnlicher Konfiguration mit drei hintereinandergeschalteten D-Flipflops und einem CMI-Binärwandler mit vier Eingangsanschlüssen und einem Takteingang ist aus der Figur 4 und der zugehörigen Beschreibung der DE-A1-33 02 761.7 bekannt.

Der Ausgangsanschluß BA des CMI-Binarwandlers CBW stellt gleichzeitig den Ausgangsanschluß für die den CMI-Eingangssignalen entsprechenden regenerierten Binärsignale dar. Der erfindungsgemäße Phasendiskriminator ist in einer Empfangsstelle für im CMI-Code auftretende digitale Signale mit einer Baudrate von 311 Mbit/s eingesetzt, die in Binärsignale mit einer Bitrate von 155 Mbit/s umgeformt werden sollen.

Zur Erläuterung der Funktion der Schaltungsanordnung nach Figur 1 wird das in der Figur 2 dargestellte Phasendiagramm herangezogen. Die mit TO bezeichnete oberste Zeile dieses Phasendiagramms zeigt das Ausgangssignal des spannungsgesteuerten Oszillators der Phasenregelschleife, aus dem durch Frequenzteilung im Verhältnis 2:1 das zweite Taktsignal T2 bzw. $\overline{T2}$ erzeugt wird, das in der zweiten Zeile dargestellt ist. Durch weitere Frequenzteilung im Verhältnis 2:1 wird aus dem zweiten das erste Taktsignal T1 mit einer Bitrate von 155 Mbit/s erzeugt, das in der dritten Zeile dargestellt ist. In der vierten Zeile ist das ursprüngliche Binärsignal BIN als Folge logischer Nullen und Einsen dargestellt, aus diesem Signal wurde für die Übertragung ein CMI-Signal erzeugt, das nach der Übertragung mit entsprechend verschliffenen Impulsflanken und gegebenenfalls auch Jitter am Anschluß DE empfangen wird und in der Zeile DSE dargestellt ist. Dabei ist aus der Zeile DSE erkennbar, daß eine binäre Null im Signal DSE als Doppelimpuls 0-1 wiedergegeben wird, während binäre Einsen abwechselnd als Null- bzw. Einsimpulse mit der Dauer der Impulse des Binärsignals auftreten. Da die D-Flipflops mit dem zweiten Taktsignal T2 bzw. $\overline{T2}$ getaktet werden, erscheinen deren Ausgangssignale DS1, DS2, DS3 gegenüber dem entsprechenden Eingangssignal jeweils um eine halbe Periode des zweiten Taktsignals T2 verzögert.

Für das Signal am Phasendiskriminatorausgang PDA, also am Ausgang des ersten ODER-Gatters OR1, gilt nun, daß dieses Signal auf dem Eins-Pegel ist, wenn an einem der Eingänge, also beispielsweise am zweiten Eingang für das invertierte erste Taktsignal $\overline{T1}$ oder am Dateneingang DE, der logische Eins-Pegel anliegt. Unter der Annahme, daß das invertierte erste Taktsignal $\overline{T1}$ auf dem logischen Null-Pegel liegt, also nicht schon der Pegel des ersten invertierten Taktsignals am Ausgang des ersten ODER-Gatters OR1 den Eins-Pegel erzeugt, bewirkt ein Eins-Null-Übergang am Dateneingang DE einen Wechsel des Zustandes am Phasendiskriminatorausgang PDA vom Eins-Pegel zum Null-Pegel. Der Wechsel auf dem Eins-Pegel erfolgt nach Übernahme der logischen Null vom Dateneingang in das erste D-Flipflop DF1 und entsprechend die Erzeugung des logischen Eins-Pegels an dessen invertierenden Ausgang $\overline{Q}$. Der erfindungsgemäße Bezug zum Binärtakt T1 wird über den zweiten Eingang des ersten ODER-Gatters OR1, also über das inverse erste Taktsignal $\overline{T1}$ entsprechend dem Binartakt erzeugt. Nur wenn am zweiten Eingang des ersten ODER-Gatters der logische Null-Pegel ansteht sind also wechselnde Impulse am Phasendiskriminatorausgang PDA möglich. Bei falscher Phase sind die Impulse gesperrt, in diesem Falle wird aber vom Ausgang des zweiten ODER-Gatters OR2 über den Anschluß PDR zum anderen Gegentakt-Verstärkereingang des Schleifenverstärkers die Änderung der Phasenregelschleife solange angeregt, bis sie sich in der richtigen Phasenlage fängt.

Für die Erläuterung der Erzeugung der Ausgangssignale des zweiten ODER-Gatters OR2 wird davon ausgegangen, daß nach einem vorher abgetasteten logischen Eins-Pegel am invertierenden Ausgang $\overline{Q}$ des zweiten D-Flipflops DF2 der zunächst logische Null-Pegel anliegt. Erfolgt nun ein Übergang vom logischen Eins-Pegel auf den logischen Null-Pegel am nichtinvertierenden Ausgang Q des ersten D-Flipflops DF1, also im Signal DS1 und damit am D-Eingang des zweiten D-Flipflops DF2 und am ersten Eingang des zweiten ODER-Gatters OR2, dann wird zunächst am Ausgang des zweiten ODER-Gatters OR2 ein Eins-Null-Übergang erzeugt. Eine halbe Periode des zweiten Taktsignals T2 danach wird vom zweiten D-Flipflop DF2 die logische Null an seinem D-Eingang abgetastet und entsprechend an seinem invertierenden Ausgang $\overline{Q}$ der logische Eins-Pegel erzeugt. Damit ändert sich der Pegel am zweiten Eingang des zweiten ODER-Gatters OR2 von Null nach Eins und damit auch der Pegel am Gatterausgang bzw. am Anschluß PDR.

Bei Übergängen von Null nach Eins überlappen sich die logischen Eins-Zustände an den beiden Eingängen des zweiten ODER-Gatters OR2, so daß dessen Ausgangspegel unverändert auf dem logischen Eins-Pegel bleibt. Damit erzeugt nur jeder der Eins-Null-Übergänge im Ausgangssignal DS1 des ersten D-Flipflops DF1 einen Null-Impuls am Ausgang des zweiten ODER-Gatters OR2 für eine halbe Periode des zweiten Taktsignals T2.

Im eingeschwungenen Zustand stellt sich die geschlossene Phasenregelschleife so ein, daß die Impulse am Phasendiskriminatorausgang PDA denen am Anschluß PDR entsprechen, damit liegen dann die Eins-Null-Übergänge des Eingangssignals am Dateneingang DE etwa eine halbe Periode des zweiten Taktsignals T2 vor der negativen Flanke dieses Taktsignals, so daß die Abtastung der Eingangssignale durch das erste D-Flipflop DF1 etwa in Bitmitte erfolgt.

Bei der praktischen Untersuchung hat es sich herausgestellt, daß die Diskriminatorsteilheit des erfindungsgemaßen Phasendiskriminators von der Dichte der ausgewerteten Übergänge, also vom Pattern abhängig ist, durch die CMI-Codierung der Eingangssignale hält sich die Schwankungsbreite aber bei maximal 3:1 und durch die zusätzliche Verbindung vom Anschluß PDR zum Gegentakteingang des Schleifenverstärkers wird die Funktion der Phasenregelschleife insgesamt patternunabhängig.

**Patentansprüche**

1. Phasendiskriminator für CMI-codierte Signale, insbesondere zum Einsatz in einer Phasenregelschleife,
**dadurch gekennzeichnet**,

   daß mit einem Eingang (DE) für die CMI-codierten Signale der D-Eingang eines ersten D-Flipflops DF1 und der erste Eingang eines ersten ODER-Gatters (OR1) mit drei Eingängen verbunden ist,
   daß der zweite Eingang dieses ersten ODER-Gatters mit einem Anschluß für ein invertiertes erstes Taktsignal ($\overline{T1}$) und der Takteingang des ersten D-Flipflops mit einem Anschluß für ein zweites Taktsignal (T2) verbunden sind,
   daß der invertierende Ausgang ($\overline{Q}$) des ersten D-Flipflops (DF1) mit dem dritten Eingang des ersten ODER-Gatters (OR1) verbunden ist,
   daß der Ausgangsanschluß des ersten ODER-Gatters (OR1) den Phasendiskriminatorausgang (PDR) darstellt,
daß es sich beim ersten Taktsignal (T1 bzw. $\overline{T1}$) um das Taktsignal des den CMI-Signalen entsprechenden Binärsignals handelt und
daß das zweite Taktsignal (T2 bzw. $\overline{T2}$) das Taktsignal der CMI-Signale ist.

2. Phasendiskriminator nach Patentanspruch 1,
**dadurch gekennzeichnet**,
daß mit dem nichtinvertierenden Ausgang (Q) des ersten D-Flipflops (DF1) der D-Eingang eines zweiten D-Flipflops (DF2) und der erste Eingang eines zweiten ODER-Gatters (OR2) mit zwei Eingängen verbunden ist, daß der Takteingang des zweiten D-Flipflops (DF2) an eine Quelle für ein invertiertes zweites Taktsignal ($\overline{T2}$) angeschlossen ist, daß mit dem invertierenden Ausgang ($\overline{Q}$) des zweiten D-Flipflops (DF2) der zweite Eingang des zweiten ODER-Gatters (OR2) verbunden ist und daß dessen Ausgang über einen Anschluß (PDR) mit einem zusätzlichen Eingang desjenigen Schleifenverstärkers verbunden ist, dessen erster Eingang mit dem Phasendiskriminatorausgang (PDR) verbunden ist.

3. Phasendiskriminator nach Patentanspruch 2,
**dadurch gekennzeichnet,**

   daß mit dem nichtinvertierenden Ausgang (Q) des zweiten D-Flipflops (DF2) der D-Eingang eines dritten D-Flipflops (DF3) verbunden ist und dessen Takteingang mit dem Takteingang des ersten D-Flipflops (DF1) verbunden ist,
   daß der nichtinvertierende Ausgang (Q) des dritten D-Flipflops (DF3) mit einem ersten Eingang und der invertierende Ausgang ($\overline{Q}$) mit einem zweiten Eingang eines CMI-Binärcodewandlers (CBW) verbunden ist, daß der dritte Eingang dieses CMI-Binarwandlers mit dem nichtinvertierenden Ausgang (Q) und der vierte Eingang mit dem invertierenden Ausgang ($\overline{Q}$) des ersten D-Flipflops (DF1) verbunden sind,
   daß der Takteingang mit einem Anschluß für das erste Taktsignal (T1) verbunden ist und daß es sich beim CMI-Binär-Wandler um ein Gatternetzwerk handelt, das in Form einer Koinzidenzschaltung auf das Auftreten von bestimmten Eingangsimpulsen hin an seinem Ausgang (BA) Binärsignale erzeugt.

**Claims**

1. Phase discriminator for CMI-coded signals, in particular for use in a phase-locked loop,
characterized

   in that the D input of a first D-type flip-flop DF1 and the first input of a first OR gate (OR1) having three inputs are connected to an input (DE) for the CMI-coded signals,

in that the second input of this first OR gate is connected to a terminal for an inverted first clock signal ($\overline{T1}$) and the clock input of the first D-type flip-flop is connected to a terminal for a second clock signal (T2),

in that the inverting output ($\overline{Q}$) of the first D-type flip-flop (DF1) is connected to the third input of the first OR gate (OR1),

in that the output terminal of the first OR gate (OR1) constitutes the phase discriminator output (PDR),

in that the first clock signal (T1 and $\overline{T1}$) is the clock signal of the binary signal corresponding to the CMI signals, and

in that the second clock signal (T2 and $\overline{T2}$) is the clock signal of the CMI signals.

2. Phase discriminator according to Patent Claim 1, characterized
in that the D input of a second D-type flip-flop (DF2) and the first input of a second OR gate (OR2) having two inputs are connected to the non-inverting output (Q) of the first D-type flip-flop (DF1), in that the clock input of the second D-type flip-flop (DF2) is connected to a source for an inverted second clock signal ($\overline{T2}$), in that the second input of the second OR gate (OR2) is connected to the inverting output ($\overline{Q}$) of the second D-type flip-flop (DF2), and in that the output of the said second OR gate is connected via a terminal (PDR) to an additional input of that loop amplifier whose first input is connected to the phase discriminator output (PDR).

3. Phase discriminator according to Patent Claim 2, characterized

in that the D input of a third D-type flip-flop (DF3) is connected to the non-inverting output (Q) of the second D-type flip-flop (DF2), and the clock input of the said third D-type flip-flop is connected to the clock input of the first D-type flip-flop (DF1),

in that the non-inverting output (Q) of the third D-type flip-flop (DF3) is connected to a first input and the inverting output (Q) to a second input of a CMI binary code converter (CBW), in that the third input of this CMI binary converter is connected to the non-inverting output (Q) and the fourth input to the inverting output ($\overline{Q}$) of the first D-type flip-flop (DF1),

in that the clock input is connected to a terminal for the first clock signal (T1), and in that the CMI binary converter is a gate network which, in the form of a coincidence circuit, generates binary signals at its output (BA) in response to the occurrence of specific input pulses.

## Revendications

1. Discriminateur de phase pour des signaux à codage CMI, destiné notamment à une utilisation dans une boucle à verrouillage de phase,
caractérisé par le fait que

à une entrée (DE) destinée aux signaux à codage CMI est reliée l'entrée D d'une première bascule D bistable (DF1) et la première entrée d'une première porte OU (OR1) à trois entrées, la deuxième entrée de cette première porte OU est reliée à une borne destinée à un premier signal d'horloge inversé ($\overline{T1}$) et l'entrée d'horloge de la première bascule D bistable est reliée à une borne destinée à un deuxième signal d'horloge (T2),

la sortie inversée ($\overline{Q}$) de la première bascule D bistable (DF1) est reliée à la troisième entrée de la première porte OU (OR1),

la borne de sortie de la première porte OU (OR1) représente la sortie (PDA) du discriminateur de phase,

le premier signal d'horloge (T1 ou $\overline{T1}$) est le signal d'horloge du signal binaire correspondant aux signaux CMI, et

le deuxième signal d'horloge (T2 ou $\overline{T2}$) est le signal d'horloge des signaux CMI.

2. Discriminateur de phase selon la revendication 1,
caractérisé par le fait que

à la sortie non inversée (Q) de la première bascule D bistable (DF1) est reliée l'entrée D d'une deuxième bascule D bistable (DF2) et la première entrée d'une deuxième porte OU (OR2) à deux entrées, l'entrée d'horloge de la deuxième bascule D bistable (DF2) est raccordée à une source donnant un deuxième signal d'horloge inversé ($\overline{T2}$), à la sortie inversée ($\overline{Q}$) de la deuxième bascule D bistable (DF2) est reliée la deuxième entrée de la deuxième porte OU (OR2) et la sortie de cette deuxième porte OU (OR2) est reliée par l'intermédiaire d'une borne (PDR) à une entrée supplémentaire de l'amplificateur de boucle, dont la première entrée est reliée à la sortie (PDA) du discriminateur de phase.

3. Discriminateur de phase selon la revendication 2,
caractérisé par le fait que

à la sortie non inversée (Q) de la deuxième bascule D bistable (DF2) est reliée l'entrée D d'une troisième bascule D bistable (DF3) dont l'entrée d'horloge est reliée à l'entrée d'horloge de la première bascule D bistable (DF1),

la sortie non inversée (Q) de la troisième bascule D bistable (DF3) est reliée à une première entrée d'un convertisseur de code CMI-binaire (CBW) et la sortie inversée ($\overline{Q}$) de cette troisiè-

me bascule D bistable (DF3) est reliée à une deuxième entrée du convertisseur CMI-binaire (CBW), la troisième entrée du convertisseur CMI-binaire (CBW) est reliée à la sortie non inversée (Q) de la première bascule D bistable (DF1) et la quatrième entrée de ce convertisseur CMI-binaire (CBW) est reliée à la sortie inversée ($\overline{Q}$) de la première bascule D bistable (DF1),

l'entrée d'horloge est reliée à une borne destinée au premier signal d'horloge (T1) et le convertisseur CMI-binaire est un circuit combinatoire qui, sous forme de circuit de coïncidence, produit des signaux binaires à sa sortie (BA) lors de l'apparition de certaines impulsions d'entrée.

FIG 1

FIG 2